# EUROPÄISCHE PATENTSCHRIFT

(11) **EP 3 149 791 B1**
(45) Veröffentlichungstag und Bekanntmachung des Hinweises auf die Patenterteilung: **19.06.2019**
(21) Anmeldenummer: 15727586.8
(22) Anmeldetag: 22.05.2015
(51) Int. Cl.: H01M 4/22, H01M 10/12

(54) **VERFAHREN ZUR FORMATION VON NASSEN UND AGM-BLEISÄUREBATTERIEN**
METHOD FOR PRODUCING WET CELL AND AGM LEAD ACID BATTERIES
PROCÉDÉ DE FORMATION DE BATTERIES AU PLOMB DE TYPE AGM ET HUMIDE

(30) Priorität: 27.05.2014 DE 102014007920
(43) Veröffentlichungstag der Anmeldung: 05.04.2017
(73) Patentinhaber: Nitsche, Werner, 59558 Lippstadt (DE); Bernd Münstermann GmbH & Co. KG, 48291 Telgte (DE)
(72) Erfinder: Nitsche, Werner, 59558 Lippstadt (DE)
(74) Vertreter: Linnemann, Winfried
(86) Internationale Anmeldenummer: PCT/EP2015/061367
(87) Internationale Veröffentlichungsnummer: WO 2015/181065

(56) Entgegenhaltungen:
- EP-A1- 0 736 922
- EP-A2- 1 576 679
- EP-A2- 1 886 366
- US-A1- 2010 239 899

## Beschreibung

Die vorliegende Erfindung bezieht sich auf einen Fertigungsschritt bei der Herstellung von Bleisäurebatterien, die sogenannte Formation. Unter Formation versteht man die Umwandlung von elektrochemisch neutralen gereiften und getrockneten negativen und positiven Platten, bestehend aus einem Elektrodenträger, 3- oder 4-basisch gereiften Massen sowie Bleioxid, zu geladenen Elektroden. Die positiven Elektroden bestehen nach der Formation aus einer vornehmlich hochporösen Bleidioxid-Kristallstruktur und die negativen aus einer hochporösen Blei-Kristallstruktur.

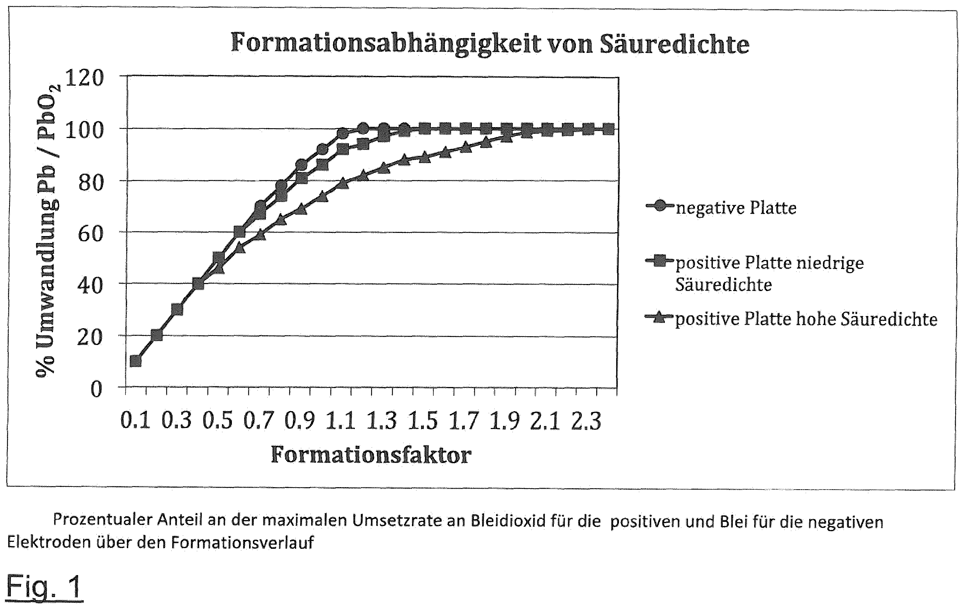

Die chemischen Reaktionen von Bleisulfat zu Bleidioxid an der positiven Elektrode sowie Bleisulfat zu Blei an der negativen Elektrode laufen in der Regel unterschiedlich schnell ab. Die Elektroden weisen mit fortschreitender Formation hinsichtlich der prozentualen Umsetzung von basischen Bleisulfaten zu Bleidioxid bzw. Blei einen unterschiedlichen prozentualen Anteil auf, wie in Figur 1 dargestellt. Die negativen Elektroden lassen sich von den basischen Bleisulfaten schneller zu Blei umwandeln als die positiven Elektroden von Bleisulfaten zu Bleidioxid. Die ungleiche Umwandlungsrate führt dazu, dass die überschüssigen Elektronen an der jeweiligen Elektrode zur Zersetzung von Wasser und/oder anderer organischer Bestandteile, z.B. des Spreizmittels, führen. Elektrochemisch setzt dieser Prozess ein, sobald die Umwandlungsraten bei den negativen und positiven Elektroden voneinander abweichen und statt der chemischen Umwandlung der Bleisulfate bei der Formation unter konstantem Strom Wasser sowie organische Bestandteile zersetzt werden. Die chemische Reaktionswärme der Reaktion von Bleioxid mit Schwefelsäure sowie der Ohm'sche Anteil bei der Zersetzung des Wassers führt zur Erwärmung und erhöht damit die Zersetzung der organischen Bestandteile, wie z.B. des Spreizmittels, des Kunststoffanteils und des Öles der Separatoren, bei der Formation unter konstantem Strom. Üblicherweise wird die Formation daher zur Kühlung in Wasserbädern ausgeführt. Dies dient dazu, kurze Formationszeiten bei Temperaturen unterhalb von 60°C zu erzielen und eine Zersetzung der organischen Bestandteile weitestgehend zu vermeiden. Als kritische Temperatur hat sich im Hinblick auf die Zersetzung der organischen Bestandteile bei der bisherigen Vorgehensweise eine Temperatur von etwa 60°C und darüber herausgestellt. Die positiven Elektroden lassen sich stets schlechter umwandeln als die negativen. Die Umwandlung ist bei der positive Elektrode stark von der Säuredichte des Elektrolyten abhängig. Bei der negativen Elektrode ist diese Abhängigkeit kaum zu beobachten. Bei der positiven Elektrode ist die Umwandlungsrate in niedriger Säuredichte höher als in höherer Säuredichte, wie in Figur 1 dargestellt.

Um die Temperatur konstant zu halten und sehr kurze Formationszeiten zu erzielen, wird seit einigen Jahren eine Formation mit Säurezirkulation und Kühlung eingesetzt. Dabei wird bei der Säurezirkulation zudem eine Formation bei niedriger Säuredichte ausgeführt, bei der sich die basischen Bleisulfate der positiven Elektroden leichter zu Bleidioxid umwandeln lassen. Bei diesem System ist jede Batteriezelle mit einer Zuleitung für den Zu- und Abfluss des Elektrolyten verbunden. Die rückfließende Säure wird über einen Säurekühler geleitet, bevor sie in die Batterie zurückgelangt. Die Säuredichte wird während des Prozesses der Umwandlung konstant niedrig gehalten und erst am Ende auf die Auslieferdichte eingestellt. Das Verfahren erlaubt die Formation in einigen wenigen Stunden. Ein Problem besteht bei diesem Verfahren darin, dass es sich nicht bei den AGM-Batterien mit Glasvlies-Separator einsetzen lässt. Die Abkürzung "AGM" steht für "Absorbent Glass Mat".

### Mängel des Standes der Technik:

Zur Verkürzung der Formationszeiten ist eine ausreichende Kühlung und Wärmeabfuhr notwendig, um die organischen Bestandteile nicht, wie zuvor beschrieben, zu zersetzen. Um die bei der Umwandlung entstehende Wärme abzuführen werden zwei Verfahren eingesetzt: (A) Die Verwendung von gekühlten Wasserbädern, bei der über die Gehäusewandungen die Wärme abgeführt wird und (B) durch Säureumwälzung und Kühlung der umgewälzten Säure. Bei beiden Verfahren ist die Kühlleistung durch die Wärmekapazität des Elektrolyten begrenzt und bei der Wasserbadkühlung ist die Kühlwirkung zudem durch die Wärmeübergänge innerhalb der Batterien und über die Wandungen an das Wasserbad begrenzt. Speziell für AGM-Batterien ist der innere Wärmetransport durch das Glasvlies sehr gehemmt und schlecht. Eine Säureumwälzung ist nicht effektiv, da nur an der Oberfläche des Plattensatzes ein Wärmeaustausch erfolgt. Ein Austausch der Säure in den Plattensätzen ist aufgrund des Glasvlieses nicht möglich, so dass die bessere Umsetzrate bei niedriger Säuredichte nicht genutzt werden kann. Es muss mit Füll-Säuredichten um die 1.20 g/cm³ und darüber anstelle von 1.10 g/cm³ bei Batterien mit PE-Separatoren, den nassen Bleisäurebatterien, gearbeitet werden. Für die ordnungsgemäße Arbeitsweise der AGM-Batterien müssen die Elektroden sowie das Glasvlies einen definierten Füllgrad an Säure aufweisen. Sowohl die Formation mit niedriger Säuredichte von ungefähr 1.10 g/cm³ und der notwendige Austausch zum Ende der Formation auf die Endsäuredichte von ungefähr 1.285 g/cm³ als auch die Erzeugung eines definierten Füllgrades des Glasvlies und der Elektroden ist bei der Säureumwälzung im Rahmen der erforderlichen geringen Toleranzen nicht erzielbar. Daher muss ein anderer Weg beschritten werden, um eine Verkürzung der Formationszeiten zu erreichen,

### Problemlösung:

Die Erfindung stellt eine Lösung vor, die dadurch gekennzeichnet ist, dass die Formation am Siedepunkt des Elektrolyten durchgeführt wird, dass der Siedepunktdurch das Anlegen eines bestimmten Drucks für jede einzelne Zelle oder alle Zellen der Bleisäurebatterie gemeinsam eingestellt wird, dass der angelegte Druck unterhalb von 500 mbar (50 kPa) liegt und dass bei der Verdampfung des Wassers am Siedepunkt die latente Wärme entnommen oder zugeführt wird, ohne eine Änderung der Temperatur zu erhalten. Die Erfindung beruht somit darauf, die latente Wärme am Siedepunkt des Wassers zur Stabilisierung der Temperatur der Batterie bei der Formation zu nutzen. Am Siedepunkt wird infolge der latenten Wärme von Wasser eine konstante Temperatur bei Wärmezufuhr von bis zu 540 kcal/kg Wasser gewährleistet. Das verdunstete Wasser kühlt und hält dabei die Temperatur konstant. In der Praxis stellt sich nun das Problem des hohen Siedepunktes von Wasser bei der Formation bei Atmosphärendruck. Bei dieser Temperatur würden die organischen Bestandteile, wie oberhalb beschrieben, zersetzt. Es ist bekannt, dass der Siedepunkt vom äußeren Druck abhängt. Diese Abhängigkeit kann erfindungsgemäß genutzt werden, um das Prinzip der Formation am Siedepunkt praktisch anzuwenden. Daher wird erfindungsgemäß vorgeschlagen, die Formation unter Unterdruck zu führen. Der Siedepunkt ist abhängig vom Druck. Der Siedepunkt liegt bei einem Druck von unter 500 mbar (50kPa) zwischen etwa 50 bis 60°C, einem Temperaturbereich, bei dem üblicherweise die Formation ausgeführt wird. Bei geringeren Temperaturen ist die chemische Umsetzrate erfahrungsgemäß geringer, so dass der zuvor genannte Bereich von 50 - 60°C erfindungsgemäß von besonderem Interesse ist. Es hat sich überraschenderweise gezeigt, dass durch das Vakuum das bei der Formation an der negativen Elektrode entstehende Gas Wasserstoff und an der positiven Elektrode entstehende Gas Sauerstoff durch Volumenvergrößerung im Vakuum umgehend entweicht und dadurch den Säureaustausch verbessert, indem die bei der Umwandlung entstehende Säure hoher Dichte mitgerissen wird. Damit ist die effektive Säuredichte in den Elektroden geringer als bei den geläufigen Formationsverfahren. Wie bereits angesprochen, ist die chemische Umwandlung bei der positiven Elektrode in niedrigerer Säuredichte höher, so dass sich durch das erfindungsgemäße Verfahren ein Vorteil ergibt. Auch wird durch das Vakuum der Verbleib von Gasen in den Elektroden vermieden, wodurch die reaktive innere Oberfläche vergrößert ist, verglichen mit den bisherigen Formationsmethoden. Bei der erfindungsgemäßen Formation unter Vakuum wird eine bessere Umsetzung an der positiven Elektrode erzielt, so dass die Formation überraschenderweise auch bei Temperaturen oberhalb 60°C durch eine sichtliche Verringerung der Zersetzung organischer Bestandteile geführt werden kann. Der optimal anzulegende Druck und die damit verbundene Temperatur sind von der Bauart der Batterie abhängig.

Da die Kühlung durch Wasserverdunstung in der Batterie erfolgt und nicht außerhalb der Batterie durch ein Wasserbad oder bei der Säureumwälzung durch einen Wärmetauscher, kann mit niedriger Füllsäure gearbeitet werden. Dies ermöglicht auch bei AGM-Batterien eine Formation mit anfänglich niedrigerer Säuredichte. Die Formierung der positiven Elektroden wird dadurch verbessert und die elektrische Energie kann reduziert werden im Vergleich zu den derzeitigen Verfahren zur Formation von AGM-Batterien.

Der Unterdruck kann auf verschiedene Arten angewendet werden:
(I) Analog zur Säureumwälzung wird jede Batterie und insbesondere auch jede Zelle mit der Vakuum-Erzeugung verbunden. Dies hat jedoch den Nachteil, dass auf die Wände der Batteriegehäuse die Druckdifferenz zwischen dem angelegten Unterdruck und dem äußeren Atmosphärendruck wirkt. Im Besonderen an den Schweißstellen zwischen Deckel und Kasten treten nicht unerhebliche Kräfte auf.
(II) Als besonders vorteilhaft hat sich herausgestellt, den Raum um die Batterie unter Unterdruck zu setzen. Als besonders vorteilhafte Realisierung werden die Batterien mit aufgesetzten Säureausgleichsbehältern in Vakuumkammern gestellt. In jedem Fall ist es von Vorteil, Säureausgleichsbehälter oberhalb der Deckel zur Vermeidung von Säureverlusten einzusetzen. Der unter (II) beschriebene Anwendungsfall vermeidet alle mechanischen Beanspruchungen, da sich außerhalb und innerhalb der Batterie der gleiche Druck befindet. Zudem entfallen alle Schlauchanschlüsse an die einzelnen Zellen, was erhebliche Vorteile bei der Umsetzung bietet, da eine manuelle oder automatisierte Kontaktierung entfällt.

Die Vakuumkammern sind vorteilhaft aus Edelstahl gefertigt, können aber auch aus dicken PP- oder PE-Platten mit oberflächlichen Verstärkungsrippen und/oder eingesetzten Stahlkernen gefertigt sein.

In besonderer Weise sind zylindrische Kammern geeignet, da sie bei geringem Materialeinsatz dem äußeren Atmosphärendruck besonders gut standhalten.

Es sind aber auch Vakuumkammern aus anderen Materialien als den zuvor genannten geeignet.

Da weder Wasserbäder noch ein Säurekühlkreislauf wie bei der Säureumwälzung benötigt werden, ist die Realisierung einfach ausführbar und kostenmäßig den bisherigen Lösungen überlegen. Im Besonderen die geringere Anzahl an Gleichrichtern, verglichen mit der Formation in Wasserbädern, bietet einen Kostenvorteil. Der Transportmechanismus und die Ausführung der Vakuumkammern stellt kein technisches Problem dar.

### Anwendungsbeispiel:

Die Figuren der beigefügten Zeichnung zeigen:
- Figur 1: ein Diagramm mit einer Darstellung der Formationsabhängigkeit von der Säuredichte über den Formationsverlauf, auf welches oben auf Seite 1 und 2 Bezug genommen wird,
- Figur 2: eine erste Vorrichtung zur Durchführung des Verfahrens, exemplarisch für eine Batterie, und
- Figur 3: eine zweite Vorrichtung zur Durchführung des Verfahrens, hier für mehrere Batterien.

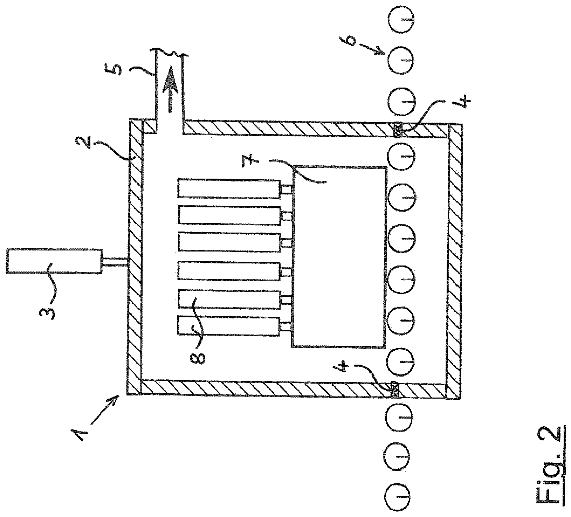

Eine erste technische Realisierung mit einer eckigen, kastenförmigen Vakuumkammer 1 ist im Schema gemäß Figur 2 exemplarisch für eine Batterie 7 dargestellt. In der Praxis wird eine längere, einige Meter lange Kammer 1 zum Einsatz kommen, mit ähnlichen Maßen wie derzeitige Wasserbäder- oder Säureumwälzanlagen.

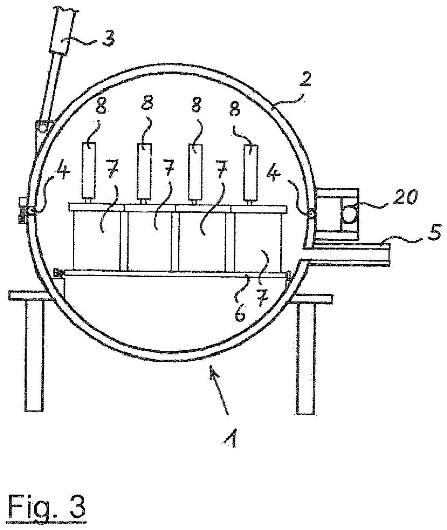

Runde rohrartige Kammern 1, wie beispielhaft in Figur 3 gezeigt, sind besonders geeignet, um Material zu sparen, da sie bei geringeren Wandstärken dem Druck besser standhalten.

Das Zuführen der Batterien 7 in die Vakuumkammer 1 und das Abführen der Batterien 7 aus der Vakuumkammer 1 erfolgt mittels Schleusen an den Enden der Kammer über ein Transportband 6. Zur elektrischen Kontaktierung der Batterien 7 mit den Formationsgleichrichtern kann ein Bereich 2 mit einer Anhebevorrichtung 3, wie Hydraulik- oder Pneumatik-Zylinder, zweckmäßigerweise geöffnet werden, z.B. durch Anheben des Bereichs 2, wie in Figur 2, oder durch Verschwenken des Bereichs 2 um ein Schwenkgelenk 20, wie in Figur 3. Im Schließzustand sind die relativ zueinander bewegbaren Teile der Vakuumkammer 1 gegeneinander mittels Dichtungen 4, wie Gummidichtungen, luftdicht abgedichtet.

Zum Erzeugen eines Vakuums in der Vakuumkammer 1 dient wenigstens ein Vakuumanschluss 5, der zu einer hier nicht dargestellten Vakuumpumpe führt. Außerdem kann der Vakuumanschluss 5 zu einem hier ebenfalls nicht dargestellten Vorabscheider führen.

Die genauen Abmessungen der Vakuumkammer 1 werden sich aus den räumlichen sowie ergonomischen Gegebenheiten vor Ort ergeben.

Eine oder mehrere Vakuumpumpen können eingesetzt werden. Es ist erwähnenswert, dass es durch die Aufrechterhaltung eines ständigen geringen Drucks zu keiner Ausbildung an zündfähigem Knallgasgemisch kommen kann. Hinter der Vakuumpumpe sollte eine Verdünnung mit Luft genutzt werden, um unterhalb der zündfähigen Konzentration zu bleiben.

Darüber hinaus sollte die Kammer 1 allein aus Sicherheitsgründen als Faraday-Käfig gegen elektrostatische Entladungen abgesichert sein. Hierzu können verschiedene Realisierungen gewählt werden. Ein Einsatz von leitfähigem Kunststoff ist die einfachste Möglichkeit bei Verwendung von Kammern aus Kunststoff.

Die Erfindung basiert auf dem Prinzip, den Siedepunkt des Wassers zu nutzen, um die Temperatur innerhalb der Zellen konstant zu halten. Die Temperatur kann allein durch den angelegten Druck konstant gehalten werden. Sobald die Temperatur der Säure lokal den Siedepunkt erreicht, wird Wasserdampf erzeugt und die relativ hohe latente Wärme von Wasser sorgt dafür, dass die Temperatur konstant gehalten wird. Der Vorteil des erfindungsgemäßen Verfahrens besteht ferner darin, dass es für alle Batterietypen, nasse und speziell AGM- und GEL-Batterien einsetzbar ist.

Die Kühlung des erfindungsmäßigen Vorschlags ist effektiver als bei der Säureumwälzung, da die latente Wärme 540 kcal/kg Wasser beträgt, wobei bei Wärmeaustausch nur 1 kcal/kg pro 1°C übertragen werden kann. Der Prozess lässt sich damit sehr effizient und genau steuern. Die entzogene Wassermenge ist genau anhand der eingesetzten Amperestunden berechenbar, so dass die erforderliche Genauigkeit hinsichtlich des Füllgrades an Elektrolyt des Glasvlieses sowie der Elektroden speziell für AGM-Batterien erzielt werden kann. Da der Partialdruck des Wassers bei ca. 40 mbar (4 kPa) liegt, ist das System bis zu etwa 40°C einsetzbar. Temperaturen unterhalb 40°C sind aufgrund der geringeren chemischen Umsetzraten nicht von Interesse.

Die Erfindung beschreibt einen sehr effektiven und sehr schnellen Prozess zur Formation von nassen und AGM-Batterien. Durch die Erzeugung des Vakuums wird das Gas besser abgeführt und die interne Kontaktfläche zwischen der Oberfläche der Kristalle und dem Elektrolyten wird vergrößert. Dies führt zu einer geringeren Menge an Strom, die für die Formation benötigt wird. Die Herstellkosten einschließlich Gleichrichter liegen unter denen der bisherigen Anlagen. Die Formationszeit wird bei nassen Batterien ein wenig unterhalb derjenigen der Umwälzsäurekühlung liegen.

Im Besonderen für AGM-Batterien bietet diese Formation eine wesentliche Verbesserung. Zunächst verringert sich die Formationszeit und zum anderen wird die Qualität gleichmäßiger. Derzeit beträgt die Formationszeit von AGM-Batterien ca. 2 Tage. Bei Einsatz der Erfindung wird sie sich auf weniger als einen halben Tag reduzieren. Da nur AGM-Batterien den zukünftigen Anforderungen der Erstausrüster im Automobilbereich gerecht werden, werden sie die nassen Batterien mittelfristig ersetzen. Bei den Fahrzeugen der gehobenen Klasse ist dies bereits erfolgt, woraus sich die große kommerzieller Bedeutung der Erfindung ableiten lässt.

**Bezugszeichenliste:**

| Zeichen | Bezeichnung |
|---|---|
| 1 | Vakuumkammer |
| 2 | anhebbarer Bereich von 1 |
| 20 | Schwenkgelenk |
| 3 | Anhebevorrichtung |
| 4 | Dichtungen |
| 5 | Vakuumanschluss |
| 6 | Transportband |
| 7 | Batterien |
| 8 | Säureaufsatzbehälter |

## Patentansprüche

1. Verfahren zur Formation von nassen und Absorbent Glass Mat (AGM)-Bleisäurebatterien (7) unter Verwendung eines Elektrolyten,
**dadurch gekennzeichnet,**
**dass** die Formation am Siedepunkt des Elektrolyten durchgeführt wird, dass der Siedepunkt durch das Anlegen eines bestimmten Drucks für jede einzelne Zelle oder alle Zellen der Bleisäurebatterie (7) gemeinsam eingestellt wird,
**dass** der angelegte Druck unterhalb von 500 mbar (50 kPa) liegt und
**dass** dabei die Temperatur aufgrund der latenten Wärme durch die Verdampfung von Wasser konstant gehalten und die notwendige Wärmeabfuhr gewährleistet wird.

2. Verfahren nach Anspruch 1, **dadurch gekennzeichnet, dass** der angelegte Druck unterhalb von 200 mbar (20 kPa) liegt.

3. Verfahren nach Anspruch 1 oder 2, **dadurch gekennzeichnet, dass** die Formation ohne Wasserbadkühlung betrieben wird.

4. Verfahren nach Anspruch 1 oder 2, **dadurch gekennzeichnet, dass** die Formation mit Wasserbadkühlung betrieben wird.

5. Verfahren nach einem der Ansprüche 1 bis 4 **dadurch gekennzeichnet, dass** Säureaufsatzbehälter (8) zur Vermeidung von Säureverlusten und als Ausgleichgefäß genutzt werden.

6. Verfahren nach Anspruch 5 **dadurch gekennzeichnet, dass** Säureaufsatzbehälter (8) mit nur einer sehr kleinen, Säurenebel zurückhaltenden und nur Wasserdampf sowie Wasserstoff und Sauerstoff entweichen lassenden Öffnung in der Größenordnung von mm im oberen Bereich eingesetzt werden.

7. Verfahren nach einem der Ansprüche 1 bis 6 **dadurch gekennzeichnet, dass** es in einer die Bleisäurebatterien (7) aufnehmenden, als Faraday-Käfig ausgeführten und vor Entzündung von Knallgas durch Funken oder elektrische Entladungen gesicherten Vakuumkammer (1) durchgeführt wird.

## Claims

1. Method for the formation of wet cell and absorbent glass mat (AGM) lead acid batteries (7), using an electrolyte,
**characterised in**
**that** the formation is performed at the boiling point of the electrolyte, that the boiling point is set by applying a certain pressure for each individual cell or for all cells in common of the lead acid battery (7),
**that** the applied pressure lies below 500 mbar (50 kPa); and
**that** the temperature in that case is held constant due to the latent heat by the evaporation of water and the necessary heat dissipation is ensured.

2. The method according to Claim 1, **characterised in that** the applied pressure lies below 200 mbar (20 kPa).

3. The method according to Claim 1 or 2, **characterised in that** the formation is performed without cooling in a water bath.

4. The method according to Claim 1 or 2, **characterized in that** the formation is performed with cooling in a water bath.

5. The method according to one of Claims 1 to 4, **characterised in that** put-on acid reservoirs (8) are used to avoid acid losses and as a compensating vessel.

6. The method according to Claim 5, **characterised in that** put-on acid reservoirs (8) are used, which have only a very small orifice in the mm range in the upper area, that retains acid mist and allows only water vapour, hydrogen and oxygen to escape.

7. The method according to one of Claims 1 to 6, **characterised in that** the method is performed in a vacuum chamber (1) that accommodates the lead acid batteries (7), is designed as a Faraday cage and is safeguarded against the ignition of oxyhydrogen gas by sparks or electrical discharge.

## Revendications

1. Procédé de formation de batteries au plomb (7) humide et de type Absorbent Glass Mat (AGM), à l'aide d'un électrolyte,
**caractérisé en ce**
**que** ladite formation est exécutée au point d'ébullition de l'électrolyte, que l'application d'une pression donnée permet de fixer le point d'ébullition individuellement pour chacune des cellules ou collectivement pour toutes les cellules de la batterie au plomb (7),
**que** ladite pression appliquée est inférieure à 500 mbar (50 kPa) et
**que** cela permet de maintenir la température à un niveau constant grâce à la chaleur latente émanant de l'évaporation d'eau, et de garantir le dégagement de chaleur nécessaire.

2. Procédé selon la revendication 1, **caractérisé en ce que** la pression appliquée est inférieure à 200 mbar (20 kPa).

3. Procédé selon la revendication 1 ou 2, **caractérisé en ce que** la formation fonctionne sans refroidissement au bain-marie.

4. Procédé selon la revendication 1 ou 2, **caractérisé en ce que** la formation fonctionne avec refroidissement au bain-marie.

5. Procédé selon l'une quelconque des revendications 1 à 4, **caractérisé en ce que** des conteneurs pour acide (8) sont utilisés pour éviter les pertes d'acide et en tant que récipients de compensation.

6. Procédé selon la revendication 5, **caractérisé en ce que** sont utilisés des conteneurs pour acide (8) qui ne sont dotés en leur partie supérieure que d'une toute petite ouverture, de l'ordre du mm, retenant les brouillards acides et ne laissant passer que la vapeur d'eau ainsi que l'hydrogène et l'oxygène.

7. Procédé selon l'une quelconque des revendications 1 à 6, **caractérisé en ce qu'**il est mis en oeuvre dans une chambre vide (1) dans laquelle sont logées les batteries au plomb (7), qui est réalisée en tant que cage de Faraday et sécurisée contre l'inflammation d'oxyhydrogène due aux étincelles ou décharges électriques.
